# EUROPEAN PATENT SPECIFICATION

(11) **EP 3 894 236 B1**
(45) Date of publication and mention of the grant of the patent: **16.08.2023**
(21) Application number: 19835721.2
(22) Date of filing: 03.12.2019
(51) Int. Cl.: B60C 11/03, B60C 11/12

(54) **TYRE FOR VEHICLE WHEELS**
REIFEN FÜR FAHRZEUGRÄDER
PNEU DESTINÉ À DES ROUES DE VÉHICULE

(30) Priority: 13.12.2018 IT 201800011055
(43) Date of publication of application: 20.10.2021
(73) Proprietor: Pirelli Tyre S.p.A., 20126 Milano (IT)
(72) Inventor: SPEZIARI, Diego Ettore, 20126 Milano (IT); MONTESELLO, Stefano, 20126 Milano (IT); BIZZI, Stefano, 20126 Milano (IT); DE CANCELLIS, Pier Luigi, 20126 Milano (IT)
(74) Representative: Susanetto, Carlo
(86) International application number: PCT/IB2019/060410
(87) International publication number: WO 2020/121120

(56) References cited:
- EP-A1- 0 718 123
- JP-A- H0 825 917
- US-A- 5 849 119
- US-A- 5 954 107

## Description

The present invention relates to a tyre for vehicle wheels, in particular a directional tyre.

A tyre generally comprises a carcass structure that is shaped like a toroid about an axis of rotation and comprises at least one carcass ply having end flaps that engage in respective annular anchoring structures, said bead cores.

A belt structure is provided on the radial outside of the carcass structure and, in tyres for cars, comprises at least two bands that are radially overlaid with rubberised fabric provided with reinforcing cords, usually metal cords, arranged inside each ply so as to be parallel to one another but to create a crisscross with the cords of the adjacent ply, preferably symmetrically with respect to the equatorial plane of the tyre.

Furthermore, the belt structure preferably also comprises a third layer of fabric or metal cords on the radial outside thereof, at least at the ends of the above-mentioned belt bands, which cords are arranged circumferentially (at 0 degrees).

In tubeless tyres, a radially internal layer is also provided, called a "liner", which is impermeable so as to ensure that said tyre is airtight.

A tread band is applied to the radial outside of the belt structure, which is made of elastomer material and on which there is defined a tread surface that is intended to come into contact with the road surface.

In order to ensure an adequate degree of road holding even when the road surface is wet, the tyres comprise a tread band provided with grooves of various shapes and geometries, which delimit tread band portions, called blocks that are intended to come into contact with the ground.

The main function of the grooves is to allow the water present between the surface of the tyre and the road surface to escape when these come into contact with one another, thus preventing the hydrostatic pressure originating from the impact of the water against the advancing tyre from being able to cause the tyre to lift, even in part, from the road surface and preventing the vehicle from consequently losing control.

Furthermore, in winter tyres, small notches, called "sipes", are generally made in the blocks of the tread band and extend from the tread surface of the tyre towards the inside of the block. The function of the sipes is to offer additional grip elements when driving on a surface covered in snow and to hold a certain amount of snow, thereby improving the tyre's grip on the road surface.

The overall configuration of the tread band, which is defined by the grooves and blocks as a whole, represents the tread pattern.

The tread pattern may or may not be symmetrical with respect to the equatorial plane of the tyre.

In the first case, the two tread band regions that are divided by the equatorial plane are substantially specular, with the exception of possible limited degrees of displacement in the circumferential direction caused by the need to reduce the noise of the tyre as it rotates. Conversely, in the second case, the two regions of the tread band are different from one another. This makes it possible to design each of these in a more targeted manner with regard to the different stresses and demands that may respectively affect the external and internal regions of the tread band when driving on different road surfaces (dry, wet and snow-covered).

In this case, the tread band region intended to face the outside when the tyre is mounted on the vehicle and the tread band region intended to face the vehicle itself are predefined.

A tyre having a tread pattern of the type briefly described above is called an "asymmetrical" tyre.

A tyre whose tread pattern is specially designed to rotate in a preferred driving direction is called a "directional" tyre.

In general, a symmetrical tyre is designed to be a directional tyre, while an asymmetrical tyre cannot be a directional tyre.

A known example of a directional winter tyre is described in WO 2013/042023, by the same applicant. EP 0 718 123 A1 discloses a tyre for vehicle wheels comprising a tread band, in which there are defined: a first circumferential groove 6 and a second circumferential groove 6, between which two central ribs 4 and 5 are formed, a first region which extends from a first lateral edge of said tread band as far as said first circumferential groove 6, a second region which extends from a second lateral edge of said tread band as far as said second circumferential groove 6, a plurality of first pairs of corresponding transverse grooves which are successively arranged over the circumferential extent of said first region, a plurality of second pairs of corresponding transverse grooves which are successively arranged over the circumferential extent of said second region, wherein each of said first pairs comprises a first transverse groove which extends between said first lateral edge and said first circumferential groove and a second transverse groove which extends between said first circumferential groove and said first lateral edge with an inclination which is discordant with respect to said first transverse groove, each of said second pairs comprises a third transverse groove which extends between said second lateral edge and said second circumferential groove and a fourth transverse groove which extends between said second circumferential groove and said second lateral edge with an inclination which is discordant with respect to said third transverse groove. US 5954107, US 5849119 and JP H0825917 disclose further examples of tyres according to the prior art.

The term "equatorial plane" of the tyre means a plane that is perpendicular to the axis of rotation of the tyre and divides the tyre into two equal parts.

A "circumferential" direction means a direction that generally faces in the direction of rotation of the tyre or is at most slightly inclined (by no more than approximately 5°) with respect to the direction of rotation of the tyre.

"Axial" direction means a direction that is substantially parallel to the axis of rotation of the tyre, or, at most, is slightly inclined (by no more than approximately 5°) with respect to said axis of rotation of the tyre. The axial direction is generally perpendicular to the circumferential direction.

The term "effective width" referring to the tread band means the width of the radially outermost portion of the tread band (from edge to edge) that is intended to come into contact with the ground.

The "central region" of the tread band means a tread band portion that extends circumferentially about an equatorial plane of said tyre for a width that is equal to at least 30 % of the effective width of the tread band, preferably between 40 % and 75 % of the effective width.

The central region may or may not extend symmetrically with respect to the equatorial plane.

In particular, when circumferential or quasi-circumferential grooves are made in the tread band, the central region can be delimited by one of said circumferential grooves on one side or on both sides.

The "shoulders" of the tread band mean the tread band portions that extend circumferentially, on opposite sides of the central region, on the axial outside of the tread band.

Each shoulder preferably extends for a width that is equal to or is at least 10 % of the effective width of the tread band.

The term "groove" means a recess made in a tread band portion, having a width that is greater than or equal to 1.5 mm, and preferably a depth greater than 3 mm.

A groove is said to be a "circumferential" groove when it extends in a circumferential direction or, at most, is inclined with respect to the circumferential direction by an angle of less than 5°.

A groove is said to be a "transverse" groove when it extends in a direction that is inclined with respect to the circumferential direction by an acute angle that is greater than at least 10°.

A groove is said to be a "main" groove when it has a width of more than 3 mm, preferably of more than 5 mm, whereas it is said to be a "secondary" groove when it has a width of less than or equal to 3 mm.

The term "sipe" means a recess made in a tread band portion, having a width of less than 1.5 mm, preferably less than or equal to 1 mm.

The width of sipes and grooves is intended to be measured at a depth that is greater than or equal to 1 mm, preferably greater than or equal to 1.5 mm.

If the width of the groove or of the sipe varies along its longitudinal extent, the average width is taken into consideration, the value of which is the average of the various width values that are suitably weighed on the basis of the relative longitudinal extensions. For example, if a groove has a width of 5 mm for 80 % of its longitudinal extension and a width of 3 mm for the remaining 20 %, the average width to be taken into consideration will be equal to 5 x 0.8 + 3 x 0.2 = 4.6 mm.

Similarly, if the width of a groove, in particular of a transverse groove, varies along the tread band depending on length of the pitch to which it belongs, the average is taken into consideration.

A groove is said to be a "through-groove" when it is open to two or more separate grooves, thereby connecting them. For branched grooves, a through-groove comprises at least two ends that are open to separate grooves.

An end of a groove is defined as being "blind" when it is not open to another groove.

The end of a groove is said to "face" another groove when said end is positioned near to the other groove at a spacing of no more than 10 mm therefrom or is open in the other groove.

A groove, or an end thereof, is said to be "open" in another groove when the two grooves are connected to one another at said end. The end of one groove has to be connected to the other groove at a spacing from the tread surface that is not zero, however, this spacing may be smaller than the depth of the other groove.

In other words, the two grooves have to be in fluid communication with one another.

The inclination of a transverse groove with respect to a circumferential direction identified on the tread band is defined by the acute angle formed by the groove together with the circumferential direction. In particular, a transverse groove extending in parallel with the axis of the tyre would have an inclination of 90° with respect to the circumferential direction.

Two (or more) transverse grooves are inclined "in a concordant manner" when the trend of both grooves either increases or decreases, when considered on a Cartesian plane positioned on the tread band (tangentially thereto) in which the y-axis is parallel to the circumferential direction and the x-axis is parallel to the axis of the tyre.

As a result, two transverse grooves are inclined "in a discordant manner" when the trend of one groove increases and the trend of the other groove decreases, when considered in said Cartesian plane.

A groove is "substantially circumferential" when it extends in the circumferential direction or is inclined with respect thereto by an angle of less than 5°.

Two groove segments (or two grooves) are "substantially aligned" when their longitudinal axes, at least at their respective ends that face one another, are displaced by an amount that is smaller than their width (in the case of segments of different widths, the larger width is taken into consideration). Otherwise, two groove segments (or two grooves) are defined as "not being aligned". The offset value between two groove segments (or two grooves) is measured as the distance between the respective longitudinal axes.

Two grooves are "adjacent" when they are arranged one after the other in the tread surface, taking into consideration the rotation of the tyre in either of the two directions of rotation. In particular, two grooves of the same type are adjacent when no other grooves of this same type are provided therebetween.

The "tread pattern" means the overall configuration of the tread band, defined by all of the grooves and the sipes delimited by said grooves.

Two tread band regions are "substantially symmetrical" with respect to a plane that is parallel to the equatorial plane when the tread pattern of one region is specular with respect to the tread pattern of the other region with regard to said plane, with the possible exception of a limited degree of displacement of the two regions in the circumferential direction or with the possible exception of the configuration or the width thereof at the respective shoulders.

In particular, the displacement in the circumferential direction can be smaller than a value for the length that is expressed in absolute values, for example less than 80 mm, or, more preferably, can be less than a value for the length that is expressed in terms that relate to a measurement that is characteristic of the tread pattern, such as the size of the pitch of the module of the tread pattern.

In particular, the plane parallel to the equatorial plane is said equatorial plane.

Similarly, two or more grooves, or the respective segments thereof, are "substantially symmetrical" to one another with respect to a plane that is parallel to the equatorial plane when they are specular with respect to said plane, with the possible exception of a limited displacement in the circumferential direction, or with the possible exception of the configuration or the width thereof at the shoulders.

A "module" of the tread pattern is defined by the smallest tread band portion, the configuration of which is successively repeated along the circumferential extent of the tread band in order to form said tread pattern.

A module extends between the axial ends of the tread band. Furthermore, while maintaining an identical basic configuration, the modules can have a slightly different circumferential dimension (said "pitch"); for example, modules having two, three or four different pitches that are variably combined can be used on a tread band.

A first group of a predefined type of grooves is said to be "complementary" to a second group of grooves of the same type when the sum of the grooves of the first and the second group represents the total number of grooves of this type.

The applicant has preliminarily observed that the tread pattern of a directional tyre often comprises a plurality of main transverse grooves that are generally in the shape of an arrowhead, or "V" shaped, having two opposite arms that symmetrically depart from the edges of the tread band and extend towards the centre of said tread band.

Furthermore, in several examples of directional tyres, the main transverse grooves have a generally curvilinear shape, comprising an inclination with respect to the circumferential direction that decreases from the axially external end thereof up to the axially internal end thereof.

This configuration of the main transverse grooves advantageously makes it possible to create a channel that is preferred for evacuating the water out of the axially internal region of the tread band towards the shoulders.

The applicant has also observed that the grooves influence the characteristics of the tyre in terms of directionality and travelling stability in relation to the tangential stresses directed perpendicularly to the extension direction of the grooves.

In particular, the applicant has verified that the grooves made in the circumferential direction influence the characteristics of the tyre in terms of directionality and travelling stability in relation to the tangential stresses by means of a component that is parallel to the axis of rotation of the tyre, for example when driving the vehicle round corners, while the grooves made in the axial direction in turn influence the features of the tyre in terms of traction in relation to the tangential stresses by means of a component that is parallel to the direction of travel, for example when accelerating and braking the motor vehicle.

The applicant has therefore noted that, in directional tyres provided with main transverse grooves designed as described above, under certain road surface conditions, the contribution of the central region during traction or braking can be limited by the provision of grooves in this region that are heavily inclined with respect to the axial direction of the tyre, therefore poorly suited to offering effective gripping edges, for example in the event of traction on snow-covered surfaces.

The applicant has therefore perceived that the performance of a directional tyre could be improved by introducing new grooves, whose shape compensated for that of the main transverse grooves, without introducing traction imbalances at a local level.

The applicant has lastly found that a tyre has improved tractive characteristics, particularly on icy surfaces, when it comprises at least one central rib that separates a first and a second region, which extend from the opposite lateral edges up to the central rib and are substantially symmetrical to a plane that is parallel to the equatorial plane and wherein, in each region, pairs of first and second corresponding transverse grooves are provided, both comprising respective axially internal segments and axially external segments that are at different inclinations respect to one another, and in which the axially external segment of the first transverse groove and the axially internal segment of the second transverse groove, as well as the axially internal segment of the first transverse groove and the axially external segment of the second transverse groove are inclined in a discordant manner but by substantially similar angles in absolute values, and in which the axially external end of the first transverse groove is axially aligned or quasi-aligned with the axial internal end of the second transverse groove.

In particular, in a first aspect thereof, the invention relates to a tyre for vehicle wheels, according to claim 1.

On account of these features, the tyre according to the invention performs better in terms of traction and braking. The provision of the second transverse grooves, a large part of the shape of which is substantially symmetrical to the first transverse grooves, making it possible to also provide gripping edges in the region that is closest to the equatorial plane of the tread band, which increase the tractive action of the segments of the first transverse groove present in the shoulders, without introducing imbalances that may lead to tangential drifts of the tyre.

This makes it possible to produce a tyre that is able to act on the road surface more uniformly, while behaving in an overall more balanced manner.

In the above-mentioned aspect, the present invention can comprise at least one of the additional preferred features indicated below.

Said first end of said second transverse groove is preferably open in said first circumferential groove.

Said first end of said fourth transverse groove is preferably open in said second circumferential groove.

In this way, the second transverse groove and/or the fourth transverse groove are in fluid communication with the first circumferential groove or with the second circumferential groove, respectively, thereby advantageously making it possible to improve the rapid discharge of the water present in the region just before the central rib, for example when travelling on a wet surface.

In fact, the water present in this region can be rapidly guided towards the circumferential groove that delimits the central rib, thereby avoiding the longest route up to the lateral edge of the tread band.

The need to ensure a rapid evacuation of the water from the axially internal regions of the tread band is always present when designing a new tread pattern, and on the one hand makes it possible to increase road holding during normal travel and, on the other hand, to reduce the risk of aquaplaning occurring.

Said third angle and said first angle preferably differ, in absolute values, by less than 10°.

Said fourth angle and said second angle preferably differ, in absolute values, by less than 10°.

Said eighth angle and said sixth angle preferably differ, in absolute values, by less than 10°.

Said ninth angle and said seventh angle preferably differ, in absolute values, by less than 10°.

Said first end of said second transverse groove and said first end of said first transverse groove are preferably substantially aligned in an axial direction of the tyre or are at most displaced by less than 10 mm.

Said first end of said fourth transverse groove and said first end of said third transverse groove are preferably substantially aligned in an axial direction of the tyre or are at most displaced by less than 10 mm.

By means of each of the features identified above, tread patterns are obtained in which the first and the second transverse grooves, or the third and the fourth transverse grooves, respectively, have respective shapes that are increasingly symmetrical, which consequently improve the positive effects in respect of the tyre's balance and the uniformity with which it acts.

Said first transverse groove and/or said third transverse groove preferably have a width of more than 3 mm, more preferably have a width of between 5 and 9 mm.

In this way, the first transverse groove and/or the third transverse groove is/are designed as main grooves, therefore provided with a greater ability to evacuate the water.

Said second segment of said first transverse groove and/or of said third transverse groove preferably has a width that decreases from said first segment up to a particular axially internal end of said first and/or said third transverse groove.

In this way, a channel is formed, the width of which increases from the region that is closest to the equatorial plane towards the lateral edge of the tread band, in order to facilitate the process of passing the water from the inside to the outside of the tread band.

Said axially internal end of said first and/or said third transverse groove is preferably blind.

In this way, the first and/or the third transverse groove are used to evacuate the water present in the tread band portion that is to the side of the central rib, thereby preventing streams of water originating from the circumferential groove from entering said rib, which could prevent the water from entering the first or third transverse groove, which water is present in the region in which said grooves are made.

Said second and/or said fourth transverse groove preferably have a width of between 1.5 and 3 mm.

In this way, the second and/or the fourth transverse groove is/are designed as secondary grooves, effectively fulfilling their function of providing hold corners that balance the action of the first (or, respectively, the third) transverse groove and providing a rapid connection for evacuating the water towards the first or the second circumferential groove, without excessively weakening the axially internal region of the tread band by means of another main transverse groove.

Said fourth transverse groove preferably comprises a third segment that extends from said second segment of said third transverse groove on the opposite side to said second segment of the fourth transverse groove.

On account of these features, the designs of the first and the second transverse groove, or, respectively, of the third and fourth transverse groove, are even more symmetrical.

Said third segment and said second segment of said second and/or of said fourth transverse groove are preferably substantially parallel to one another.

In this way, the tractive action exerted by the second segment of the first transverse groove or of the third transverse groove, respectively, is substantially counteracted by the action exerted by the second and by the third segment of the second transverse groove or of the fourth transverse groove, respectively.

Said third segment of said second and/or of said fourth transverse groove preferably extends between said second segment of a first transverse groove and/or of a third transverse groove, respectively, and a connecting segment between said first segment and said second segment of a first and/or of a third adjacent transverse groove, respectively.

On account of this feature, another connection is produced between two first adjacent transverse grooves or between two third adjacent transverse grooves, respectively, which further improves the behaviour in terms of evacuating the water when travelling on a wet surface.

Furthermore, the provision of the third segment of the second and/or of the fourth transverse groove makes it possible to produce blocks having suitable dimensions and a suitable configuration, preferably with four or five sides, between two first transverse grooves and/or between two third transverse grooves.

Each of said third segments of said second and/or of said fourth transverse grooves preferably comprises a first axially internal end, and said first ends of said third segments of said second and/or of said fourth transverse grooves are substantially aligned in said circumferential direction.

A first group of second transverse grooves is preferably identified in said first region, in which, in each second transverse groove, said third segment is substantially aligned with said second segment.

Said first group preferably comprises a maximum of 20% of all of said second transverse grooves made in said first region.

A second group of second transverse grooves is preferably identified in said first region, in which, in each second transverse groove, said third segment is not aligned with said second portion.

Said second group is preferably complementary to said first group.

Said second group preferably comprises a maximum of 95% of all of said second transverse grooves made in said first region.

A first group of fourth transverse grooves is preferably identified in said second region, in which, in each fourth transverse groove, said third segment is substantially aligned with said second segment.

Said first group preferably comprises a maximum of 20% of all of said fourth transverse grooves made in said second region.

A second group of fourth transverse grooves is preferably identified in said second region, in which, in each fourth transverse groove, said third segment is not aligned with said second potion.

Said second group is preferably complementary to said first group.

Said second group preferably comprises a maximum of 95% of all of said fourth transverse grooves made in said second region.

On account of these features, the tyre according to the invention has significantly reduced levels of noise. In fact, on account of the fact that some second or fourth transverse grooves, respectively, comprise respective second and third segments that are aligned with one another and others instead comprise the respective second and third segment that are not aligned with one another, the frequencies originating from the impact of said segments with the road surface is distributed across a wider spectrum, thereby reducing the overall intensity of the noise generated by said tyre.

Said first group of said second or of said fourth transverse grooves preferably comprises between 5% and 10% of all of said second or said fourth transverse grooves, respectively, which are made in said first region or in said second region, respectively.

Within this range, the performance is further improved in terms of noise optimisation and optimising road behaviour.

Second or fourth transverse grooves having different offset values between said third segment and said second segment are preferably identified in said second group of second or fourth transverse grooves, respectively.

Even more preferably, in said second group of second or fourth transverse grooves, the offset values between said third segment and said second segment of second or fourth transverse grooves, respectively, are at least three.

In this way, the noise caused by the impact of the second and the third segments of the second or of the fourth transverse grooves with the road surface is distributed across an even wider frequency spectrum so as to further decrease the overall intensity.

Preferably, in each second or fourth transverse groove of said second group, said third segment and said second segment are offset by less than 25 mm, more preferably less than 15 mm and even more preferably by less than 10 mm.

In this way, the offset between the two groove segments is kept small such that the first or the third transverse groove, respectively, maintain balance, also locally.

In another preferred embodiment, the sequence with which the third segments and the second segments of the fourth grooves are aligned or offset along the circumferential extent of the second region is different from the sequence with which the third segments and the second segments of the second grooves are aligned or offset along the circumferential extent of the first region.

In this way, the noise generated by the rotation of the tyre of the road surface is further decreased since the frequency spectrums emitted by the first and by the second tread band region are further differentiated.

Each of said first transverse grooves preferably comprises a third segment that extends from said second segment towards said equatorial plane, which third segment is inclined with respect to said circumferential direction by a fifth angle that is smaller than said second angle.

Each of said third transverse grooves preferably comprises a third segment that extends from said second segment towards said equatorial plane, which third segment is inclined with respect to said circumferential direction by a tenth angle that is smaller than said seventh angle.

In a first embodiment, said first segment of said second transverse grooves or of said fourth transverse grooves intersects said first or said third transverse grooves, respectively, in the region of said third segment.

In a second alternative embodiment, said first segment of said second transverse grooves or of said fourth transverse grooves intersects said first or said third transverse grooves, respectively, in the region of said second portion.

In this case, the second segment of the first or the third transverse grooves extends up to the axially internal end of the particular first or third transverse groove, respectively. In other words, the first and the third transverse grooves do not comprise a third segment, as defined above.

A plurality of first notches that are substantially aligned with said first segments of said second transverse grooves are preferably made in said central rib.

A plurality of second notches that are substantially aligned with said first segments of said fourth transverse grooves are preferably made in said central rib.

Said first notches or said second notches preferably extend from said first circumferential groove or said second circumferential groove, respectively, up to a blind axially internal end.

Said first notches or said second notches preferably extend from said first circumferential groove or said second circumferential groove, respectively, up to said equatorial plane.

Said first notches or said second notches preferably have a width that decreases from said first circumferential groove or from said second circumferential groove, respectively, up to said axially internal end.

Said second angle and/or said seventh angle is/are preferably between 35° and 50°, more preferably between 35° and 45°.

This configuration of the first and/or the third transverse groove, on the one hand, allows the transverse groove to enter the contact patch more gradually, thereby positively influencing the noise aspects of the tyre, and, on the other hand, maintains a sufficiently axial orientation in order to ensure optimum performance during acceleration ad braking of the tyre.

Furthermore, a first or a third transverse groove having these specific inclinations makes it possible to provide a tread pattern based on one module having a single shoulder block that extends along the circumferential extent thereof.

Said third angle and/or said eighth angle is/are preferably between 65° and 85°, more preferably between 70° and 80°.

Said fourth angle and/or said ninth angle is/are preferably between 20° and 50°, more preferably between 20° and 40°.

Said fifth angle and/or said tenth angle is/are preferably between 10° and 25°.

Said first pair of corresponding transverse grooves and said second pair of corresponding transverse grooves are preferably substantially symmetrical with respect to a plane that is parallel to an equatorial plane of said tread band.

Said first region and said second region are preferably specular with respect to said plane that is parallel to said equatorial plane with the exception of a displacement in the circumferential direction that is smaller than the size of a pitch of a module of a tread pattern that is defined on said tread band.

Said first and said second circumferential groove preferably delimit a single central rib.

Said single central rib preferably extends so as to straddle said equatorial plane and, more preferably, is specular with respect to said equatorial plane with the exception of a displacement in the circumferential direction that is smaller than the size of a pitch of a module of a tread pattern that is defined on said tread band.

A central region and opposite shoulders, which are separated from said central region by means of respective circumferential grooves that extend between first segments of first adjacent transverse grooves and between first segments of third adjacent transverse grooves, respectively, are preferably defined on said tread band.

Said opposite shoulders are preferably specular with respect to one another with regard to said equatorial plane with the exception of a displacement in the circumferential direction.

A tread pattern is preferably defined on said tread band, which is formed by the configuration of grooves made in and blocks formed on said tread band and a module of said tread pattern, which is formed by the smallest tread band portion, the configuration of which is successively repeated along the circumferential extent of the tread band so as to form said tread pattern.

Said module preferably comprises just one block in said shoulders, which extends in said circumferential direction.

This feature makes it possible to produce a tread pattern which, while maintaining a high level of performance in terms of behaviour on the road, also has optimum characteristics in terms of noise. The applicant has in fact verified that the presence of two adjacent shoulder blocks in the module of the tread pattern along the circumferential extent of the tread band has proven to be a significant source of noise.

Sipes are preferably made in the blocks and the central rib.

The sipes of said central rib preferably extend in a substantially axial direction.

The sipes made in the blocks at least partially delimited by one of said second or said fourth transverse grooves are preferably parallel to said first segment of said second or said fourth transverse grooves.

This configuration allows the sipes to make a constant and more significant contribution to the directionality of the tyre, thereby effectively contributing to compensating for the inclination of the first or the third transverse grooves.

The features and advantages of the invention will become clearer from the detailed description of a few preferred embodiments thereof, which are illustrated by way of nonlimiting example with reference to the attached drawings, in which:
- Fig. 1 is a front view of a first example of a tyre for vehicle wheels, which is formed in accordance with a first aspect of the present invention; and
- Fig. 2 is an enlarged schematic view of a representative portion of the tread band of the tyre in Fig. 1.

With reference to the attached figures, reference numeral 1 indicates a tyre for vehicle wheels as a whole, which is formed in accordance with the present invention.

The tyre 1 comprises a tyre structure (not shown in the attached figures) that is conventional *per se,* and a tread band 2 on which a tread surface 3 is defined on the radial outside of the tread band 2 and is intended to come into contact with a road surface.

The tyre 1 comprises a conventional shape that generally extends in the shape of a toroid about an axis of rotation, defining an axial direction Yon the tread surface 3 that is parallel to said axis of rotation, and through which an equatorial plane X passes, which is perpendicular to the axis of rotation and defines a circumferential direction on the tread surface 3 that is parallel thereto.

The tyre 1 is preferably intended to be mounted on a high-performance car and has a nominal sectional width of approximately 225 mm and a diameter of 17 inches.

An effective width L is identified on the tread band 2, which is defined as the maximum width of the tread band that is intended to come into contact with the ground in standard use conditions, and which, in the specific example described here, is equal to approximately 190 mm.

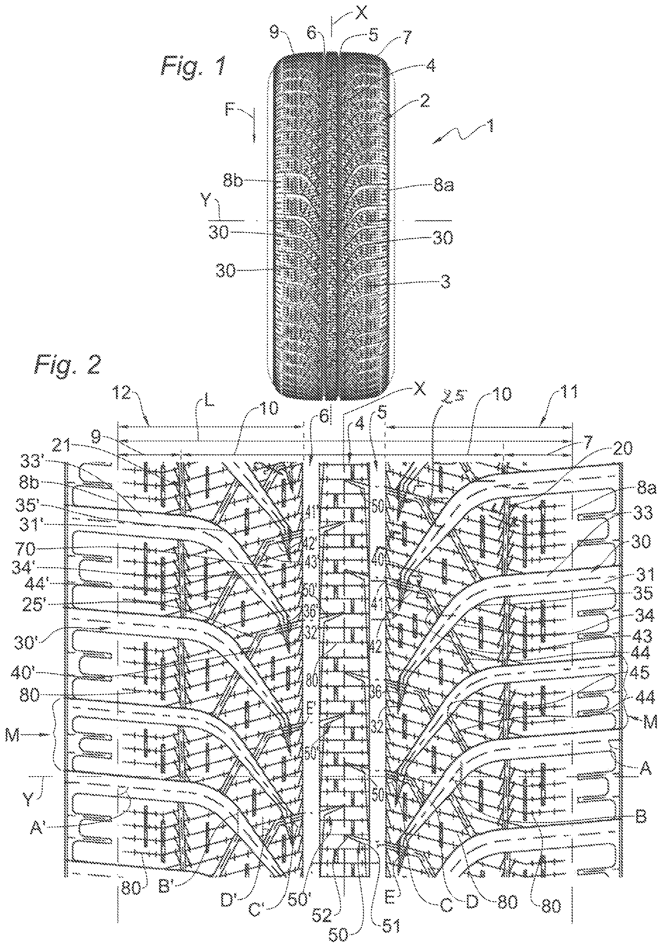

The tyre 1 is a directional tyre that is intended to be mounted on a vehicle so as to rotate in a predefined direction of rotation, which is indicated by F in Fig. 1.

The tyre 1 is also a symmetrical tyre such that the equatorial plane X divides the tread band 2 into two substantially specular halves, with the exception of a circumferential displacement between the two halves that can be quantified as approximately a half-pitch of a module of the tread pattern, as described in more detail above.

A central rib 4 is defined on the tread band 2, which extends so as to straddle the equatorial plane X and is delimited by a first circumferential groove 5 and by a second circumferential groove 6, which are specular with respect to one another with regard to the equatorial plane X.

A first shoulder 7, which extends between a first lateral edge 8a of the tread band 2 and a third circumferential groove 20, and a second shoulder 9, which is axially opposite the first shoulder 7 and extends between a second lateral edge 8b and a fourth circumferential groove 21, are also defined on the tread band 2.

A central region 10 is defined between the first shoulder 7 and the second shoulder 9, which extends between the third and the fourth circumferential grooves 20 and 21.

Furthermore, a first region 11, which extends between the first lateral edge 8a and the first circumferential groove 5, and a second region 12, which extends between the second lateral edge 8b and the second circumferential groove 6, are also defined on the tread band 2.

The first shoulder 7, as well as the second shoulder 9, extends axially for a width that is equal to approximately 25 mm such that the central region 10 extends axially for approximately 140 mm.

The first and the second circumferential groove 5, 6 have a constant width of approximately 7 mm and a depth of approximately 9 mm, while the third and the fourth circumferential groove 20 and 21 have a constant width of approximately 2 mm and a depth of approximately 3 mm. Therefore, in this embodiment, the first and the second circumferential groove 5, 6 are main grooves, while the third and the fourth circumferential groove 20, 21 are secondary grooves.

A plurality of first pairs of corresponding transverse grooves 25 are defined in the first region 11 and are arranged one after the other along the circumferential extent of the first region 11.

Each pair of first corresponding transverse grooves 25 comprises a first transverse groove 30, which extends between the first lateral edge 8a and the first circumferential groove 5, and a second transverse groove 40, which extends between the first circumferential groove 5 and the first lateral edge 8a.

The first transverse groove 30 and the second transverse groove 40 have respective inclinations with respect to the equatorial plane X that are discordant with respect to one another, as is clearly visible in Fig. 2.

Each first transverse groove 30 extends from a first axially external end 31, which is open to the first lateral edge 8a of the tread band 2, up to a second axially internal blind end 32 that faces the equatorial plane X, passing through the first shoulder 7 and ending in the central region 10 near to the first circumferential groove 5, without flowing into it.

Each first transverse groove 30 comprises a first segment 33, which extends from the first end 31, crosses the first shoulder 7, a second segment 34, which extends in the central region 10 and is connected as a continuation of the first segment 33, and a third segment 36 that extends from the second segment 34 up to the second end 32.

The first substantially rectilinear segment 33 is inclined with respect to the circumferential direction by a first angle A of approximately 85°, while the second segment 34, which is also substantially rectilinear, is inclined with respect to said circumferential direction by a second angle B of approximately 37° and is joined to the first segment 33 by means of a curved connecting segment 35. The third segment 36, which is also substantially rectilinear, is inclined with respect to the circumferential direction by a fifth angle E of approximately 15°.

The first transverse grooves 30 have a depth of approximately 9 mm and a width that varies along the extent thereof.

In particular, the first segment 33 of each first transverse groove 30 has a width, which remains constant inside a single first transverse groove, of between a minimum value of approximately 6 mm and a maximum value of approximately 11 mm, depending on the pitch of the specific module to which said first transverse groove belongs, while the second segment 34 has a width that decreases from the first segment 33 up to the second end 32, having an average size of approximately 3.5 - 4.5 mm.

In the preferred embodiment described here, the first transverse grooves 30 therefore qualify as main grooves; however, in alternative embodiments, these may be dimensioned as secondary grooves.

Furthermore, in alternative embodiments not shown here, the first groove 30 may not comprise the third segment 36, thereby continuing its extension up to the second end 32 by means of the second segment 34.

The second transverse grooves 40 extend in the first region 11 of the tread band 2 and intersect the first transverse grooves 30.

Each second transverse groove 40 comprises a first segment 42, which extends from a first axially internal end 41, which is open to the first circumferential groove 5, towards the first shoulder 7, and a second segment 43, which extends as a continuation of the first segment 42 before ending in the second segment 34 of the first transverse groove 30 of the same pair of corresponding transverse grooves 25.

Each second transverse groove 40 also comprises a third segment 44, which extends from the second segment 34 of the first corresponding transverse groove on the opposite side to the second segment 43.

All of the segments of the second transverse groove 40 have a substantially constant width that is equal to approximately 2.5 mm, and a depth of approximately 9 mm with the exception of a possible ramp near to the first circumferential groove 5 and the second segment of a first transverse groove, where the depth decreases up to 3 mm.

The second transverse groove 40 therefore qualifies as a secondary transverse groove. In alternative embodiments, the second transverse grooves may be dimensioned as main grooves.

The first substantially rectilinear segment 42 of each second transverse groove 40 is inclined with respect to the circumferential direction by a third angle C of approximately 75°, while the second segment 43, which is also substantially rectilinear, is inclined with respect to the circumferential direction by a fourth angle D of approximately 30°.

Other than having different reference signs, the third angle C and the first angle A differ in absolute values by approximately 10°, as do the second angle B and the fourth angle D.

The first segment 42 of each second transverse groove 40 intersects a first transverse groove 30 that is adjacent to the first corresponding transverse groove in the third segment 36 thereof.

In each second transverse groove 40, the third segment 44 is substantially parallel to the second segment 43 and extends from one end 45, which is open in the second segment of the first corresponding transverse groove 30, in order to flow into in a connecting segment 35 of a first transverse groove 30 that is adjacent to the corresponding first transverse groove 30, on the opposite side to the first transverse groove 30 intersected by the first segment 42.

Therefore, on the whole, each second transverse groove 40 comprises three first transverse grooves 30, one intersected by the first segment 42, one (the corresponding first transverse groove) in which the second segment 43 ends and the third segment 44 begins, and lastly one in which the third segment 44 ends.

The ends 45 of the third segments of the second transverse grooves 40 are substantially aligned in the circumferential direction.

Furthermore, the first end 41 of each second transverse groove 40 is substantially aligned in the axial direction Y, or is at most axially displaced by no more than 20 mm, preferably by no more than 10 mm, with respect to the first end 31 of the first transverse groove 30 of the same pair of corresponding transverse grooves.

In a second transverse groove 40, the third segment 44 may or may not be substantially aligned with the particular second segment 43.

In particular, a first group of second transverse grooves 40, representing a fraction that is equal to approximately 8-10% of all of the second transverse grooves 40 made in the tread band 2, comprises a substantial alignment between the second segment 43 and the third segment 44, while a second group formed by all of the remaining second transverse grooves 40 has a offset between the second segment 43 and the third segment 44.

In the second transverse grooves 40 of the second group, the offset value between the second and third segment varies from groove to groove, but is always less than 25 mm. Furthermore, these offset values between the second and third segment are at least three, between 3 mm and 25 mm.

The second region 12 is substantially specular with respect to the first region 11 with respect to the equatorial plane X, with the exception of a displacement in the circumferential direction that can be quantified as approximately a half-pitch.

Therefore, all the grooves described above with reference to the first region 11 are made in the second region 12. In particular, a plurality of second pairs of corresponding transverse grooves 25' are defined, which are formed by a third transverse groove 30' and by a fourth transverse groove 40', the shape and dimensions of which are very similar to that of the first and the second transverse groove 30 and 40, respectively.

Therefore, each third transverse groove 30' comprises a first segment 33', which extends across the second shoulder 9 from a first end 31', which is open to the second lateral edge 8b, a second segment 34', which is connected to the first segment 33' by a connecting segment 35', and a third segment 36' that extends from the second segment 34' up to a second axially internal blind end 32', which is near to the second circumferential groove 6 and faces the equatorial plane X. With regard to the circumferential direction, the first segment 33' is also inclined by a sixth angle A' of approximately 85°, the second segment 34' is inclined by a seventh angle B' of approximately 37° and the third segment 36' is inclined by a tenth angle E' of approximately 15°.

Similarly, each fourth transverse groove 40' comprises a first segment 42', which extends from a first axially internal end 41', which is open to the second circumferential groove 6, towards the second shoulder 9, a second segment 43', which extends from the first segment 42' up to the second segment 34' of the third transverse groove 30' of the same second pair of corresponding transverse grooves 25', and a third segment 44', which extends from the second segment 34' of the third corresponding transverse groove on the opposite side to the second segment 43'. With regard to the circumferential direction, the first segment 42' is also inclined by an eighth angle C' of approximately 75°, while the second segment 43' is inclined by a ninth angle D' of approximately 30°.

The third segment 44' of each fourth transverse groove 40' may or may not be aligned with respect to the second segment 43' in a similar manner to the second transverse grooves 40.

The central rib 4 has a substantially constant width of approximately 21 mm along its circumferential extent.

A plurality of first notches 50 are made in the central rib 4, which extend from a first end 51, which is open in the first circumferential groove 5, up to a second axially internal blind end 52, which is substantially positioned on the equatorial plane X.

The first notches 50 are substantially aligned with respective first segments 42 of second transverse grooves 40 and have a width that decreases from the first end 51, where it measures approximately 2.5 mm, up to the second end 52, where the width is substantially zero. The depth of the first notches 50 also decreases from the first end 51, where it measures approximately 2 mm, up to the second end 52, where it is substantially zero.

A plurality of second notches 50' are also made in the central rib 4, which are specular with respect to the first notches 50 with respect to the equatorial plane X even though they are circumferentially displaced by approximately a half-pitch.

The transverse and circumferential grooves described above delimit a corresponding plurality of blocks in the tread band 2, which are all identified by reference numeral 70.

At least one sipe 80 is formed in each block 70 and in the central rib 4, which sipe can have any suitable design. In particular, in the present embodiment, the sipes 80 extend in a rectilinear manner and, inside each block 70, the sipes are substantially parallel and equally spaced apart.

The sipes extend in a substantially axial direction in the central rib 4 and pass through the first and the second circumferential groove 5 and 6.

In the blocks arranged between the first circumferential groove 5 and the third circumferential groove 20, all the sipes 80 are parallel to the first segment 42 of the second transverse grooves 40, thereby being inclined with respect to the circumferential direction by an angle that is equal to approximately 75°.

Similarly, in the blocks arranged between the second circumferential groove 6 and the fourth circumferential groove 21, too, all the sipes 80 are parallel to the first segment 42' of the fourth transverse grooves 40', thereby being inclined with respect to the circumferential direction by an angle that is equal to approximately 75°.

In the blocks arranged between the third circumferential groove 20 and the first lateral edge 8a, the sipes 80 are formed by a first portion, which extends from the first lateral edge 8a and is substantially parallel to the direction of the first segment 33 of the first transverse grooves 30, and by a second portion that is near to the third circumferential groove 20 and is substantially parallel to the direction of the sipes 80 of the blocks 70 arranged between the first circumferential groove 5 and the third circumferential groove 20.

Similarly, in the blocks arranged between the fourth circumferential groove 21 and the second lateral edge 8b, the sipes 80 are formed by a first portion, which extends from the second lateral edge 8b substantially in parallel with the direction of the first segment 33' of the third transverse grooves 30', and by a second portion that is near to the fourth circumferential groove 21 and extends substantially in parallel with the direction of the sipes 80 of the blocks 70 arranged between the second circumferential groove 6 and the fourth circumferential groove 21.

As a whole, the blocks and the transverse and circumferential grooves define the tread pattern of the tyre.

This pattern is formed by the successive repetition of a module M along the circumferential extent of the tread band 2.

The module M comprises a single block in the first and the second shoulder 7 and 9 that extends in the circumferential direction.

In the embodiment described here, the circumferential dimension of the module M, that is its pitch, can assume three values, and modules having different pitches are variable combined along the circumferential extent of the tread band 2.

Of course, in order to meet specific and contingent needs of the application, a person skilled in the art can add additional modifications and variants to the invention described above, but these must be covered by the scope of protection that is defined by the claims that follow.

For example, in a first variant, a plurality of central ribs is defined between the first and the second circumferential groove.

In another embodiment, the central rib (or central ribs) are not centred on the equatorial plane but are moved more towards one of the two lateral edges of the tread band.

In this case, according to a first variant, the grooves in the first region can have very similar dimensions and inclinations to the corresponding grooves in the second region while maintaining a general shape of the respective segments thereof. In other words, one region can be axially "stretched out" with respect to the other region.

In a second variant of the same case, the first and the second region can be specular with respect to a plane that is parallel to the equatorial plane, while the first shoulder and the second shoulder have different widths.

### Example

The applicant compared a tyre formed in accordance with the preferred example of the invention described with reference to Fig. 1 and 2 ("invention") with a similar sized tyre that is intended for the same type of vehicles, is produced by the same applicant ("comparison"), and which has found special and continuous acceptance on the market.

The applicant therefore conducted a series of tests according to known international standards on a wet road surface in order to measure a number of characteristic parameters.

The results of the tests are summarized in the following table, Table 1, in which the values for the parameters are expressed as a percentage, with the values relating to the comparison tyre being set at 100.

**Table 1**

| | Comparison | Invention |
|---|---|---|
| Braking on a wet surface | 100 | 104 |
| Behaviour on a wet surface | 100 | 114 |

The tests therefore showed how, on a wet surface, the tyre of the invention displayed a considerably improvement in terms of braking and a particularly significant and substantial improvement in terms of behaviour on the road.

## Claims

1. Tyre for vehicle wheels, comprising a tread band (2) on which there are defined:
- a first circumferential groove (5) and a second circumferential groove (6), between which at least one central rib (4) is formed,
- a first region (11) that extends from a first lateral edge (8a) of said tread band up to said first circumferential groove (5),
- a second region (12) that extends from a second lateral edge (8b) of said tread band up to said second circumferential groove (6),
- a plurality of first pairs of corresponding transverse grooves (25) that are arranged one after the other over the circumferential extent of said first region (11),
- a plurality of second pairs of corresponding transverse grooves (25') that are arranged one after the other over the circumferential extent of said second region (12), wherein:
- each of said first pairs comprises a first transverse groove (30) that extends between said first lateral edge (8a) and said first circumferential groove (5) and a second transverse groove (40) that extends between said first circumferential groove (5) and said first lateral edge (8a) at an inclination that is discordant with respect to said first transverse groove (30),
- each of said second pairs comprises a third transverse groove (30') that extends between said second lateral edge (8b) and said second circumferential groove (6) and a fourth transverse groove (40') that extends between said second circumferential groove (6) and said second lateral edge (8b) at an inclination that is discordant with respect to said third transverse groove (30'),
- said first transverse groove (30) comprises:
i. a first segment (33) that extends from a first end (31), which is open to said first lateral edge, towards said first circumferential groove (5) and is inclined with respect to a circumferential direction by a first angle (A) of between 70° and 90°,and
ii. a second segment (34) that extends from said first segment (33) towards said first circumferential groove (5) and is inclined with respect to said circumferential direction by a second angle (B) that is smaller than said first angle (A),
- said second transverse groove (40) comprises:
i. a first segment (42) that extends from a first end (41), which faces said first circumferential groove (5), towards said first lateral edge (8a) and is inclined by a third angle (C) that differs, in absolute values, from said first angle (A) by less than 15°,and
ii. a second segment (43) that extends from said first segment (42) up to said second segment (34) of said first transverse groove (30) and is inclined by a fourth angle (D) that is smaller than said third angle (C) and differs, in absolute values, from said second angle (B) by less than 15°,
- said third transverse groove (30') comprises:
i. a first segment (33') that extends from a first end (31'), which is open to said second lateral edge, towards said second circumferential groove (6) and is inclined with respect to a circumferential direction by a sixth angle (A') of between 70° and 90°, and
ii. a second segment (34') that extends from said first segment (33') towards said second circumferential groove (6) and is inclined with respect to said circumferential direction by a seventh angle (B') that is smaller than said sixth angle (A'),
- said fourth transverse groove (40') comprises:
i. a first segment (42') that extends from a first end (41'), which faces said second circumferential groove (6), towards said second lateral edge (8b) and is inclined by an eighth angle (C') that differs, in absolute values, from said sixth angle (A') by less than 15°, and
ii. a second segment (43') that extends from said first segment (42') up to said second segment (34') of said third transverse groove (30') and is inclined by a ninth angle (D') that is smaller than said eighth angle (C') and differs, in absolute values, from said seventh angle (B') by less than 15°,
- said first end (41) of said second transverse groove (40) and said first end (31) of said first transverse groove (30) are substantially aligned in an axial direction (Y) of the tyre or are at most displaced by less than 20 mm, and
- said first end (41') of said fourth transverse groove (40') and said first end (31') of said third transverse groove (30') are substantially aligned in an axial direction (Y) of the tyre or are at most displaced by less than 20 mm,
and wherein said second transverse groove (40) comprises a third segment (44) that extends from said second segment (34) of said first transverse groove (30) on the opposite side to said second segment (43) of the second transverse groove (40).

2. Tyre according to claim 1, wherein said first end (41) of said second transverse groove (40) is open in said first circumferential groove (5).

3. Tyre according to any one of the preceding claims, wherein said first end (41) of said second transverse groove (40) and said first end (31) of said first transverse groove (30) are substantially aligned in an axial direction (Y) of the tyre or are at most displaced by less than 10 mm.

4. Tyre according to any one of the preceding claims, wherein said third segment (44) and said second segment (43) of said second transverse groove (40) are substantially parallel to one another.

5. Tyre according to any one of the preceding claims, wherein said third segment (44) of said second transverse grooves (40) extends between said second segment (34) of a first transverse groove (30) and a connecting segment (35) between said first segment (33) and said second segment (34) of an adjacent first transverse groove (30).

6. Tyre according to any one of the preceding claims, wherein on said first region (11) there are identified:
- a first group of second transverse grooves (40), comprising at most 20% of all of said second transverse grooves made in said first region, wherein, in each second transverse groove, said third segment (44) is substantially aligned with said second segment (43), and
- a second group of second transverse grooves (40), which complements said first group and comprises at most 95% of all of said second transverse grooves made in said first region, wherein, in each second transverse groove, said third segment (44) is not aligned with said second segment (43).

7. Tyre according to claim 6, wherein, in said second group, there are identified second transverse grooves (40) which have different offset values between said third segment (44) and said second segment (43).

8. Tyre according to any one of claims 6 to 7, wherein, in each second transverse groove (40) of said second group, said third segment (44) and said second segment (43) are offset with respect to one another by less than 25 mm.

9. Tyre according to any one of the preceding claims, wherein said fourth transverse groove (40') comprises a third segment (44') that extends from said second segment (34') of said third transverse groove (30') on the opposite side to said second segment (43') of the fourth transverse groove (40'), and wherein on said second region (12) there are identified:
- a first group of fourth transverse grooves (40'), comprising at most 20% of all of said fourth transverse grooves made in said second region, wherein, in each fourth transverse groove, said third segment (44') is substantially aligned with said second segment (43'), and
- a second group of fourth transverse grooves (40'), which complements said first group and comprises at most 95% of all of said fourth transverse grooves made in said second region (12), wherein, in each fourth transverse groove, said third segment (44') is not aligned with said second segment (43').

10. Tyre according to any one of the preceding claims, wherein each of said first transverse grooves (30) comprises a third segment (36) that extends from said second segment (34) towards said equatorial plane, which is inclined with respect to said circumferential direction by a fifth angle (E) that is smaller than said second angle (B).

11. Tyre according to claim 10, wherein said first segment (42) of said second transverse grooves (40) intersects said first transverse grooves (30) at said third segment (36).

12. Tyre according to any one of the preceding claims, wherein a plurality of first notches (50), which are substantially aligned with said first segments (42) of said second transverse grooves(40), are made in said at least one central rib (4).

13. Tyre according to any one of the preceding claims, wherein said first pairs of corresponding transverse grooves and said second pairs of corresponding transverse grooves are substantially symmetrical with respect to a plane that is parallel to an equatorial plane (X) of said tread band.

14. Tyre according to any one of the preceding claims, wherein said first region (11) and said second region (12) are specular with respect to said equatorial plane (X) with the exception of a displacement in the circumferential direction that is smaller than a pitch of a module of a tread pattern that is defined on said tread band.

15. Tyre according to any one of the preceding claims, wherein said first and said second circumferential groove delimit a single central rib, which is specular with respect to said equatorial plane with the exception of a displacement in the circumferential direction that is smaller than a pitch of a module of a tread pattern that is defined on said tread band.

## Patentansprüche

1. Reifen für Fahrzeugräder, umfassend ein Laufflächenband (2), auf dem Folgendes definiert ist:
- eine erste umlaufende Nut (5) und eine zweite umlaufende Nut (6), zwischen welchen zumindest eine zentrale Rippe (4) gebildet ist,
- eine erste Region (11), die sich von einem ersten Seitenrand (8a) des Laufflächenrings bis zu der ersten umlaufenden Nut (5) erstreckt,
- eine zweite Region (12), die sich von einem zweiten Seitenrand (8b) des Laufflächenrings bis zu der zweiten umlaufenden Nut (6) erstreckt,
- eine Vielzahl von ersten Paaren von entsprechenden querverlaufenden Nuten (25), die eine nach der anderen über die Umfangserstreckung der ersten Region (11) angeordnet sind,
- eine Vielzahl von zweiten Paaren von entsprechenden querverlaufenden Nuten (25'), die eine nach der anderen über die Umfangserstreckung der zweiten Region (12) angeordnet sind,
wobei:
- jedes der ersten Paare eine erste querverlaufende Nut (30) umfasst, die sich zwischen dem ersten Seitenrand (8a) und der ersten umlaufenden Nut (5) erstreckt, und eine zweite querverlaufende Nut (40), die sich zwischen der ersten umlaufenden Nut (5) und dem ersten Seitenrand (8a) in einer Schräge erstreckt, die in Bezug auf die erste querverlaufende Nut (30) entgegengesetzt ist,
- jedes der zweiten Paare eine dritte querverlaufende Nut (30') umfasst, die sich zwischen dem zweiten Seitenrand (8b) und der zweiten umlaufenden Nut (6) erstreckt, und eine vierte querverlaufende Nut (40'), die sich zwischen der zweiten umlaufenden Nut (6) und dem zweiten Seitenrand (8b) in einer Schräge erstreckt, die in Bezug auf die dritte querverlaufende Nut (30') entgegengesetzt ist,
- wobei die erste querverlaufende Nut (30) umfasst:
i. ein erstes Segment (33), das sich von einem ersten Ende (31), das zu dem ersten Seitenrand hin offen ist, zu der ersten umlaufenden Nut (5) hin erstreckt und in Bezug auf eine Umfangsrichtung in einem ersten Winkel (A) von zwischen 70° und 90° schräg ist, und
ii. ein zweites Segment (34), das sich von dem ersten Segment (33) zu der ersten umlaufenden Nut (5) hin erstreckt und in Bezug auf die Umfangsrichtung in einem zweiten Winkel (B) schräg ist, der kleiner ist als der erste Winkel (A),
- wobei die zweite quer verlaufende Nut (40) umfasst:
i. ein erstes Segment (42), das sich von einem ersten Ende (41), das der ersten umlaufenden Nut (5) zugewandt ist, zu dem ersten Seitenrand (8a) hin erstreckt und in einem dritten Winkel (C) schräg ist, der sich in absoluten Werten von dem ersten Winkel (A) um weniger als 15° unterscheidet, und
ii. ein zweites Segment (43), das sich von dem ersten Segment (42) bis zu dem zweiten Segment (34) der ersten querverlaufenden Nut (30) erstreckt und in einem vierten Winkel (D) schräg ist, der kleiner ist als der dritte Winkel (C) und sich in absoluten Werten von dem zweiten Winkel (B) um weniger als 15° unterscheidet,
- wobei die dritte querverlaufende Nut (30') umfasst:
i. ein erstes Segment (33'), das sich von einem ersten Ende (3T), das zu dem zweiten Seitenrand hin offen ist, zu der zweiten umlaufenden Nut (6) hin erstreckt und in Bezug auf eine Umfangsrichtung in einem sechsten Winkel (A') von zwischen 70° und 90° schräg ist, und
ii. ein zweites Segment (34'), das sich von dem ersten Segment (33') zu der zweiten umlaufenden Nut (6) hin erstreckt und in Bezug auf die Umfangsrichtung in einem siebenten Winkel (B') schräg ist, der kleiner ist als der sechste Winkel (A'),
- wobei die vierte querverlaufende Nut (40') umfasst:
i. ein erstes Segment (42'), das sich von einem ersten Ende (4T), das der zweiten umlaufenden Nut (6) zugewandt ist, zu dem zweiten Seitenrand (8b) erstreckt und in einem achten Winkel (C') schräg ist, der sich in absoluten Werten von dem sechsten Winkel (A') um weniger als 15° unterscheidet, und
ii. ein zweites Segment (43'), das sich von dem ersten Segment (42') bis zu dem zweiten Segment (34') der dritten querverlaufenden Nut (30') erstreckt und in einem neunten Winkel (D') schräg ist, der kleiner ist als der dritte Winkel (C') und sich in absoluten Werten von dem siebenten Winkel (B') um weniger als 15° unterscheidet,
- wobei das erste Ende (41) der zweiten querverlaufenden Nut (40) und das erste Ende (31) der ersten querverlaufenden Nut (30) in einer axialen Richtung (Y) des Reifens im Wesentlichen ausgerichtet oder höchstens um weniger als 20 mm versetzt sind, und
- wobei das erste Ende (41') der vierten querverlaufenden Nut (40') und das erste Ende (31') der dritten querverlaufenden Nut (30') in einer axialen Richtung (Y) des Reifens im Wesentlichen ausgerichtet oder höchstens um weniger als 20 mm versetzt sind,
und wobei die zweite quer verlaufende Nut (40) ein drittes Segment (44), das sich von dem zweiten Segment (34) der ersten querverlaufenden Nut (30) auf der gegenüberliegenden Seite bis zu dem zweiten Segment (43) der zweiten querverlaufenden Nut (40) erstreckt.

2. Reifen nach Anspruch 1, wobei das erste Ende (41) der zweiten querverlaufenden Nut (40) in der ersten umlaufenden Nut (5) offen ist.

3. Reifen nach einem der vorhergehenden Ansprüche, wobei das erste Ende (41) der zweiten querverlaufenden Nut (40) und das erste Ende (31) der ersten querverlaufenden Nut (30) in einer axialen Richtung (Y) des Reifens im Wesentlichen ausgerichtet oder höchstens um weniger als 10 mm versetzt sind.

4. Reifen nach einem der vorhergehenden Ansprüche, wobei das dritte Segment (44) und das zweite Segment (43) der zweiten querverlaufenden Nut (40) im Wesentlichen parallel zueinander sind.

5. Reifen nach einem der vorhergehenden Ansprüche, wobei das dritte Segment (44) der zweiten querverlaufenden Nuten (40) sich zwischen dem zweiten Segment (34) einer ersten querverlaufenden Nut (30) und einem Verbindungssegment (35) zwischen dem ersten Segment (33) und dem zweiten Segment (34) einer benachbarten ersten querverlaufenden Nut (30) erstreckt.

6. Reifen nach einem der vorhergehenden Ansprüche, wobei auf der ersten Region (11) Folgendes identifiziert sind:
- eine erste Gruppe von zweiten querverlaufenden Nuten (40), die höchstens 20 % aller zweiten querverlaufenden Nuten umfasst, die in der ersten Region gebildet sind, wobei in jeder zweiten querverlaufenden Nut das dritte Segment (44) mit dem zweiten Segment (43) im Wesentlichen ausgerichtet ist, und
- eine zweite Gruppe von zweiten querverlaufenden Nuten (40), die zu der ersten Gruppe komplementär ist und höchstens 95 % aller in der ersten Region gebildeten zweiten querverlaufenden Nuten umfasst, wobei in jeder zweiten querverlaufenden Nut das dritte Segment (44) nicht mit dem zweiten Segment (43) ausgerichtet ist.

7. Reifen nach Anspruch 6, wobei in der zweiten Gruppe zweite querverlaufende Nuten (40) identifiziert sind, die verschiedene Versatzwerte zwischen dem dritten Segment (44) und dem vierten Segment (43) aufweisen.

8. Reifen nach einem der Ansprüche 6 bis 7, wobei in jeder zweiten querverlaufenden Nut (40) der zweiten Gruppe das dritte Segment (44) und das zweite Segment (43) in Bezug aufeinander um weniger als 25 mm versetzt sind.

9. Reifen nach einem der vorhergehenden Ansprüche, wobei die vierte querverlaufende Nut (40') ein drittes Segment (44') umfasst, das sich von dem zweiten Segment (34') der dritten querverlaufenden Nut (30') auf der entgegengesetzten Seite bis zu dem zweiten Segment (43') der vierten querverlaufenden Nut (40') erstreckt, und wobei auf der zweiten Region (12) identifiziert sind:
- eine erste Gruppe von vierten querverlaufenden Nuten (40'), die höchstens 20 % aller vierten querverlaufenden Nuten umfasst, die in der zweiten Region gebildet sind, wobei in jeder vierten querverlaufenden Nut das dritte Segment (44') mit dem zweiten Segment (43') im Wesentlichen ausgerichtet ist, und
- eine zweite Gruppe von vierten querverlaufenden Nuten (40'), die zu der ersten Gruppe komplementär ist und höchstens 95 % aller in der ersten Region (12) gebildeten vierten querverlaufenden Nuten umfasst, wobei in jeder vierten querverlaufenden Nut das dritte Segment (44') nicht mit dem zweiten Segment (43') ausgerichtet ist.

10. Reifen nach einem der vorhergehenden Ansprüche, wobei jede der ersten querverlaufenden Nuten (30) ein drittes Segment (36) umfasst, das sich von dem zweiten Segment (34) zu der Äquatorialebene hin erstreckt, die in in Bezug auf die Umfangsrichtung in einem fünften Winkel (E) schräg ist, der kleiner ist als der zweite Winkel (B).

11. Reifen nach Anspruch 10, wobei das erste Segment (42) der zweiten querverlaufenden Nuten (40) die ersten querverlaufenden Nuten (30) an dem dritten Segment (36) schneidet.

12. Reifen nach einem der vorhergehenden Ansprüche, wobei eine Vielzahl von ersten Kerben (50), die im Wesentlichen mit den ersten Segmenten (42) der zweiten querverlaufenden Nuten (40) ausgerichtet sind, in der zumindest einen zentralen Rippe (4) gebildet sind.

13. Reifen nach einem der vorhergehenden Ansprüche, wobei die ersten Paare von entsprechenden querverlaufenden Nuten und die zweiten Paare von entsprechenden querverlaufenden Nuten im Wesentlichen symmetrisch in Bezug auf eine Ebene sind, die parallel zu einer Äquatorialebene (X) des Laufflächenrings ist.

14. Reifen nach einem der vorhergehenden Ansprüche, wobei die erste Region (11) und die zweite Region (12) in Bezug auf die Äquatorialebene (X) spiegelbildlich sind, mit Ausnahme einer Verschiebung in der Umfangsrichtung, die geringer ist als ein Abstand eines Moduls eines Laufflächenmusters, das an dem Laufflächenring definiert ist.

15. Reifen nach einem der vorhergehenden Ansprüche, wobei die erste und die zweite umlaufende Nut eine einzelne zentrale Rippe definieren, die in Bezug auf die Äquatorialebene (X) spiegelbildlich ist, mit Ausnahme einer Verschiebung in der Umfangsrichtung, die geringer ist als ein Abstand eines Moduls eines Laufflächenmusters, das an dem Laufflächenring definiert ist.

## Revendications

1. Pneu pour roues de véhicule, comprenant une bande de roulement (2) sur laquelle sont définis :
- une première rainure circonférentielle (5) et une deuxième rainure circonférentielle (6), entre lesquelles est formée au moins une nervure centrale (4),
- une première région (11) qui s'étend depuis un premier bord latéral (8a) de ladite bande de roulement jusqu'à ladite première rainure circonférentielle (5),
- une deuxième région (12) qui s'étend depuis un deuxième bord latéral (8b) de ladite bande de roulement jusqu'à ladite deuxième rainure circonférentielle (6),
- une pluralité de premières paires de rainures transversales correspondantes (25) qui sont agencées les unes après les autres sur l'étendue circonférentielle de ladite première région (11),
- une pluralité de deuxièmes paires de rainures transversales correspondantes (25') qui sont agencées les unes après les autres sur l'étendue circonférentielle de ladite deuxième région (12),
dans lequel :
- chacune desdites premières paires comprend une première rainure transversale (30) qui s'étend entre ledit premier bord latéral (8a) et ladite première rainure circonférentielle (5) et une deuxième rainure transversale (40) qui s'étend entre ladite première rainure circonférentielle (5) et ledit premier bord latéral (8a) selon une inclinaison qui est discordante par rapport à ladite première rainure transversale (30),
- chacune desdites deuxièmes paires comprend une troisième rainure transversale (30') qui s'étend entre ledit deuxième bord latéral (8b) et ladite deuxième rainure circonférentielle (6) et une quatrième rainure transversale (40') qui s'étend entre ladite deuxième rainure circonférentielle (6) et ledit deuxième bord latéral (8b) selon une inclinaison qui est discordante par rapport à ladite troisième rainure transversale (30'),
- ladite première rainure transversale (30) comprend :
i. un premier segment (33) qui s'étend depuis une première extrémité (31), qui est ouverte sur ledit premier bord latéral, vers ladite première rainure circonférentielle (5) et est incliné par rapport à une direction circonférentielle d'un premier angle (A) compris entre 70° et 90°, et
ii. un deuxième segment (34) qui s'étend depuis ledit premier segment (33) vers ladite première rainure circonférentielle (5) et est incliné par rapport à ladite direction circonférentielle d'un deuxième angle (B) qui est inférieur audit premier angle (A),
- ladite deuxième rainure transversale (40) comprend :
i. un premier segment (42) qui s'étend depuis une première extrémité (41), qui fait face à ladite première rainure circonférentielle (5), vers ledit premier bord latéral (8a) et est incliné d'un troisième angle (C) qui diffère, en valeurs absolues, dudit premier angle (A) de moins de 15°, et
ii. un deuxième segment (43) qui s'étend depuis ledit premier segment (42) jusqu'audit deuxième segment (34) de ladite première rainure transversale (30) et est incliné d'un quatrième angle (D) qui est inférieur audit troisième angle (C) et diffère, en valeurs absolues, dudit deuxième angle (B) de moins de 15°,
- ladite troisième rainure transversale (30') comprend :
i. un premier segment (33') qui s'étend depuis une première extrémité (3T), qui est ouverte sur ledit deuxième bord latéral, vers ladite deuxième rainure circonférentielle (6) et est incliné par rapport à une direction circonférentielle d'un sixième angle (A') compris entre 70° et 90°, et
ii. un deuxième segment (34') qui s'étend depuis ledit premier segment (33') vers ladite deuxième rainure circonférentielle (6) et est incliné par rapport à ladite direction circonférentielle d'un septième angle (B') qui est inférieur audit sixième angle (A'),
- ladite quatrième rainure transversale (40') comprend :
i. un premier segment (42') qui s'étend depuis une première extrémité (4T), qui fait face à ladite deuxième rainure circonférentielle (6), vers ledit deuxième bord latéral (8b) et est incliné d'un huitième angle (C') qui diffère, en valeurs absolues, dudit sixième angle (A') de moins de 15°, et
ii. un deuxième segment (43') qui s'étend depuis ledit premier segment (42') jusqu'audit deuxième segment (34') de ladite troisième rainure transversale (30') et est incliné d'un neuvième angle (D') qui est inférieur audit huitième angle (C') et diffère, en valeurs absolues, dudit septième angle (B') de moins de 15°,
- ladite première extrémité (41) de ladite deuxième rainure transversale (40) et ladite première extrémité (31) de ladite première rainure transversale (30) sont sensiblement alignées dans une direction axiale (Y) du pneu ou, au plus, sont décalées de moins de moins de 20 mm, et
- ladite première extrémité (41') de ladite quatrième rainure transversale (40') et ladite première extrémité (31') de ladite troisième rainure transversale (30') sont sensiblement alignées dans une direction axiale (Y) du pneu ou, au plus, sont décalées de moins de 20 mm,
et dans lequel ladite deuxième rainure transversale (40) comprend un troisième segment (44) qui s'étend depuis ledit deuxième segment (34) de ladite première rainure transversale (30) sur le côté opposé audit deuxième segment (43) de la deuxième rainure transversale (40).

2. Pneu selon la revendication 1, dans lequel ladite première extrémité (41) de ladite deuxième rainure transversale (40) est ouverte dans ladite première rainure circonférentielle (5).

3. Pneu selon l'une quelconque des revendications précédentes, dans lequel ladite première extrémité (41) de ladite deuxième rainure transversale (40) et ladite première extrémité (31) de ladite première rainure transversale (30) sont sensiblement alignées dans une direction axiale (Y) du pneu ou, au plus, sont décalées de moins de 10 mm.

4. Pneu selon l'une quelconque des revendications précédentes, dans lequel ledit troisième segment (44) et ledit deuxième segment (43) de ladite deuxième rainure transversale (40) sont sensiblement parallèles l'un à l'autre.

5. Pneu selon l'une quelconque des revendications précédentes, dans lequel ledit troisième segment (44) desdites deuxièmes rainures transversales (40) s'étend entre ledit deuxième segment (34) d'une première rainure transversale (30) et un segment de liaison (35) entre ledit premier segment (33) et ledit deuxième segment (34) d'une première rainure transversale (30) adjacente.

6. Pneu selon l'une quelconque des revendications précédentes, dans lequel sur ladite première région (11) sont identifiés :
- un premier groupe de deuxièmes rainures transversales (40), comprenant au plus 20% de l'ensemble desdites deuxièmes rainures transversales réalisées dans ladite première région, dans lequel, dans chaque deuxième rainure transversale, ledit troisième segment (44) est sensiblement aligné avec ledit deuxième segment (43), et
- un deuxième groupe de deuxièmes rainures transversales (40), qui complète ledit premier groupe et comprend au plus 95% de l'ensemble desdites deuxièmes rainures transversales réalisées dans ladite première région, dans lequel, dans chaque deuxième rainure transversale, ledit troisième segment (44) n'est pas aligné avec ledit deuxième segment (43).

7. Pneu selon la revendication 6, dans lequel, dans ledit deuxième groupe, sont identifiées des deuxièmes rainures transversales (40) qui ont des valeurs de décalage différentes entre ledit troisième segment (44) et ledit deuxième segment (43).

8. Pneu selon l'une quelconque des revendications 6 et 7, dans lequel, dans chaque deuxième rainure transversale (40) dudit deuxième groupe, ledit troisième segment (44) et ledit deuxième segment (43) sont décalés l'un par rapport à l'autre de moins de 25 mm.

9. Pneu selon l'une quelconque des revendications précédentes, dans lequel ladite quatrième rainure transversale (40') comprend un troisième segment (44') qui s'étend depuis ledit deuxième segment (34') de ladite troisième rainure transversale (30') sur le côté opposé audit deuxième segment (43') de la quatrième rainure transversale (40'), et dans lequel sur ladite deuxième région (12) sont identifiés :
- un premier groupe de quatrièmes rainures transversales (40'), comprenant au plus 20% d'ensemble desdites quatrièmes rainures transversales réalisées dans ladite deuxième région, dans lequel, dans chaque quatrième rainure transversale, ledit troisième segment (44') est sensiblement aligné avec ledit deuxième segment (43'), et
- un deuxième groupe de quatrièmes rainures transversales (40'), qui complète ledit premier groupe et comprend au plus 95% de l'ensemble desdites quatrièmes rainures transversales réalisées dans ladite deuxième région (12), dans lequel, dans chaque quatrième rainure transversale, ledit troisième segment (44') n'est pas aligné avec ledit deuxième segment (43').

10. Pneu selon l'une quelconque des revendications précédentes, dans lequel chacune desdites premières rainures transversales (30) comprend un troisième segment (36) qui s'étend depuis ledit deuxième segment (34) vers ledit plan équatorial, qui est incliné par rapport à ladite direction circonférentielle d'un cinquième angle (E) qui est inférieur audit deuxième angle (B).

11. Pneu selon la revendication 10, dans lequel ledit premier segment (42) desdites deuxièmes rainures transversales (40) coupe lesdites premières rainures transversales (30) au niveau dudit troisième segment (36).

12. Pneu selon l'une quelconque des revendications précédentes, dans lequel une pluralité de premières encoches (50), qui sont sensiblement alignées avec lesdits premiers segments (42) desdites deuxièmes rainures transversales (40), sont réalisées dans ladite au moins une nervure centrale (4).

13. Pneu selon l'une quelconque des revendications précédentes, dans lequel lesdites premières paires de rainures transversales correspondantes et lesdites deuxièmes paires de rainures transversales correspondantes sont sensiblement symétriques par rapport à un plan qui est parallèle à un plan équatorial (X) de ladite bande de roulement.

14. Pneu selon l'une quelconque des revendications précédentes, dans lequel ladite première région (11) et ladite deuxième région (12) sont spéculaires par rapport audit plan équatorial (X) à l'exception d'un déplacement dans la direction circonférentielle qui est inférieur à un pas d'un module d'une sculpture qui est définie sur ladite bande de roulement.

15. Pneu selon l'une quelconque des revendications précédentes, dans lequel ladite première et ladite deuxième rainure circonférentielle délimitent une unique nervure centrale, qui est spéculaire par rapport audit plan équatorial à l'exception d'un déplacement dans la direction circonférentielle qui est inférieur à un pas d'un module d'une sculpture qui est définie sur ladite bande de roulement.
